# FASCICULE DE BREVET EUROPEEN

(11) **EP 3 898 130 B1**
(45) Date de publication et mention de la délivrance du brevet: **05.06.2024**
(21) Numéro de dépôt: 19813876.0
(22) Date de dépôt: 10.12.2019
(51) Int. Cl.: B25J 9/16

(54) **INSTALLATION ET PROCEDE DE TRAITEMENT AUTOMATISE, ET NOTAMMENT DE DECOUPE EN TRANCHES, D'UN PRODUIT RIGIDE TEL QU'UN PRODUIT ALIMENTAIRE SURGELE**
ANLAGE UND VERFAHREN ZUM AUTOMATISCHEN BEARBEITEN UND INSBESONDERE AUFSCHNEIDEN EINES STARREN PRODUKTS, WIE ETWA EINES GEFRORENEN LEBENSMITTELPRODUKTES
FACILITY AND METHOD FOR THE AUTOMATED PROCESSING, AND IN PARTICULAR THE SLICING, OF A RIGID PRODUCT SUCH AS A FROZEN FOOD PRODUCT

(30) Priorité: 19.12.2018 FR 1873358; 19.12.2018 FR 1873366
(43) Date de publication de la demande: 27.10.2021
(73) Titulaire: 6D Systems, 62360 Saint-Léonard (FR)
(72) Inventeur: RIDEZ, Jean-Marie, 62930 Wimereux (FR); BATEMAN, Xavier, 62200 Boulogne (FR)
(74) Mandataire: Matkowska, Franck
(86) Numéro de dépôt international: PCT/EP2019/084305
(87) Numéro de publication internationale: WO 2020/126631

(56) Documents cités:
- DE-A1-102016 102 034
- US-A1- 2018 295 783

## Description

### Domaine Technique

La présente invention concerne le traitement automatisé d'un produit rigide, et plus particulièrement la découpe automatisée d'un produit rigide, tel qu'un produit alimentaire surgelé.

### Art antérieur

On a déjà proposé à ce jour, par exemple dans la demande allemande DE10 2016 102034 A1 ainsi que dans les demandes de brevet européen EP1782929, EP1178878, et EP2266766, une installation de traitement automatisé, et notamment de découpe en tranches, d'un produit rigide tel qu'un produit alimentaire surgelé, et par exemple un poisson surgelé. Cette installation met en oeuvre au moins un convoyeur qui achemine les produits et les fait passer l'un après l'autre successivement dans une unité de scannage 3D, puis dans une unité de traitement, telle que par exemple une unité de découpe en tranches.

L'automatisation complète du traitement d'un produit et notamment de la découpe en tranches d'un produit, permet avantageusement de réduire très significativement les risques d'accidents corporels, comparativement à une mise en oeuvre d'un traitement nécessitant une intervention manuelle d'un opérateur pour réaliser le traitement du produit.

Le scannage 3D de chaque produit permet avantageusement d'acquérir numériquement la géométrie en trois dimensions du produit et d'adapter automatiquement le traitement, et par exemple la découpe en tranches du produit, aux dimensions réelles du produit, sachant que tous les produits peuvent avoir des formes 3D différentes et spécifiques. La qualité de l'acquisition numérique de la géométrie en trois dimensions du produit est donc importante et peut influer sur la précision et/ou la qualité du traitement subséquent.

Or dans la solution technique décrite dans ces publications, le convoyeur interfère avec l'unité de scannage 3D, ce qui complique le scannage 3D de chaque produit et nuit notamment à la qualité et à la précision du scannage 3D.

### Objectif de l'invention

Un objectif de l'invention est de proposer une installation de traitement automatisé d'un produit rigide, qui met en oeuvre une mesure de la géométrie en trois dimensions du produit, et qui pallie les inconvénients susvisés.

### Résumé de l'invention

L'invention a ainsi pour objet une installation de traitement d'un produit rigide, ladite installation comportant au moins un bras manipulateur robotisé, qui est équipé d'une pince de préhension adaptée pour saisir par une extrémité et tenir en porte-à-faux un produit rigide, une unité de mesure 3D permettant une acquisition numérique de la géométrie en trois dimensions d'au moins une partie d'un produit à traiter, une unité de traitement, et des moyens électroniques de commande, qui sont configurés pour piloter le déplacement dans l'espace de la pince de préhension au moyen du bras manipulateur robotisé, pour commander la pince de préhension, et pour commander l'unité de mesure 3D et l'unité de traitement, de manière à réaliser les étapes successives suivantes pour chaque traitement d'un produit rigide :
- préhension au moyen de la pince de préhension d'un produit rigide à traiter, qui est saisi par une de ses extrémités et tenu en porte-à-faux par la pince de préhension,
- déplacement de la pince de préhension au moyen du bras manipulateur robotisé de manière à positionner et le cas échéant à déplacer le produit qui est tenu en porte-à-faux par la pince de préhension par rapport à l'unité de mesure 3D et acquisition numérique au moyen de l'unité de mesure 3D de la géométrie en trois dimensions d'au moins une partie du produit à traiter, et de préférence au moins de toute la partie du produit qui est en porte-à faux par rapport à la pince de préhension,
- déplacement de la pince de préhension au moyen du bras manipulateur robotisé, de manière à positionner le produit tenu par la pince de préhension, par rapport à l'unité traitement,
- traitement automatique dudit produit, au moyen de l'unité traitement, en fonction au moins de la géométrie en trois dimensions de tout ou partie de ce produit, qui a été acquise numériquement au moyen de l'unité de mesure 3D, le produit étant de préférence tenu et le cas échéant éventuellement déplacé au moyen de la pince de préhension au cours du traitement.

Plus particulièrement, cette installation peut comporter les caractéristiques additionnelles et facultatives ci-après, prises isolément ou en combinaison les unes avec les autres :
- l'unité de mesure 3D est une unité de scannage 3D, et de préférence une unité de scannage 3D sans contact.
- le bras manipulateur robotisé est un bras à six axes de rotation motorisés.
- l'unité de traitement est une unité de découpe automatique.
- l'unité de traitement est une unité de découpe automatique d'un produit en plusieurs tranches.
- les moyens électroniques de commande sont aptes à commander le déplacement de la pince de préhension dans l'unité de découpe automatique de manière à réaliser une découpe d'un produit tenu par la pince en plusieurs tranches ayant sensiblement le même poids.
- l'unité de traitement comporte un plateau, qui est mobile et qui comporte une lumière de guidage ; l'outil de préhension comporte un doigt d'indexage adapté pour être introduit dans la lumière de guidage du plateau de manière à permettre une translation guidée de la pince de préhension par le doigt d'indexage coulissant dans la lumière de guidage et à permettre un déplacement du plateau au moyen de la pince de préhension et par l'intermédiaire du doigt d'indexage introduit dans la lumière de guidage dans au moins une direction transversale à la lumière de guidage.
- l'installation comporte un système de convoyage permettant d'acheminer les produits rigides les uns derrière les autres jusqu'à une zone de préhension accessible par la pince de préhension.
- l'installation comporte au moins deux bras manipulateurs robotisés, qui sont équipés chacun d'une pince de préhension adaptée pour saisir par une extrémité et tenir en porte-à-faux un produit rigide, et qui sont pilotés par lesdits moyens électroniques de commande de telle sorte que pendant un premier cycle de fonctionnement un premier bras manipulateur effectue les opérations de préhension et d'acquisition numérique, au moyen de l'unité de mesure 3D, de la géométrie en trois dimensions de tout ou partie du produit saisi pendant que le deuxième bras manipulateur robotisé positionne et le cas échéant déplace un produit, qui a été saisi au cycle de fonctionnement précédent, par rapport à une unité de traitement, et que pendant le cycle de fonctionnement suivant le deuxième bras manipulateur effectue les opérations de préhension et d'acquisition numérique, au moyen de l'unité de mesure 3D, de la géométrie en trois dimensions de tout ou partie du produit saisi pendant que le premier bras manipulateur robotisé positionne et le cas échéant déplace le produit qui a été saisi au cycle de fonctionnement précédent par rapport à une unité de traitement.
- une pince de préhension comporte une face de préhension (101 0a) et plusieurs doigts de préhension, dans laquelle chaque doigt de préhension comporte une extrémité de préhension, qui est orientée vers la face de préhension, et est mobile en translation linéaire par rapport à la face de préhension, le long d'un axe de translation, qui est perpendiculaire à la face de préhension, dans laquelle la pince de préhension comporte des moyens d'actionnement des doigts, qui sont aptes à commander le déplacement, simultané ou non, des doigts entre une position rentrée des doigts et une configuration de préhension des doigts, dans laquelle chaque doigt est déplacé indépendamment des autres doigts en direction de la face de préhension, jusque dans une position, qui peut être différente d'un doigt à l'autre, et dans laquelle le doigt est apte à être bloqué en butée et en pression contre une surface interposée entre la face de préhension et l'extrémité de préhension du doigt.
- la face de préhension comporte des rugosités de surface améliorant l'accrochage d'un produit.
- les rugosités de surface sont formées par des rainures.
- la pince de préhension comporte une butée de calage permettant de bloquer en translation, dans une direction parallèle à la face de préhension de la pince de préhension, un produit qui est en contact avec la face de préhension de la pince de préhension.
- ladite butée de calage et la face de préhension forment une équerre.
- chaque doigt comporte une tige qui fait partie intégrante d'un actionneur linéaire ou qui est fixée rigidement à un actionneur linéaire.
- chaque actionneur linéaire est un vérin.
- chaque actionneur linéaire est un vérin à commande pneumatique, hydraulique ou électrique et plusieurs doigts et de préférence tous les doigts sont aptes à être actionnés simultanément au moyen de la même source de fluide ou de la même source d'alimentation électrique.
- au moins un doigt, et de préférence chaque doigt, comporte une pointe rigide formant l'extrémité de préhension du doigt.
- la pince de préhension est apte à pivoter autour d'un axe de rotation motorisé et orienté perpendiculairement à l'axe de translation des doigts.

L'invention a également pour objet un procédé de traitement d'un produit rigide au moyen de l'installation susvisée, comportant les étapes successives suivantes :
- préhension au moyen de la pince de préhension d'un produit rigide à traiter, qui est saisi par une de ses extrémités et tenu en porte-à-faux par la pince de préhension ;
- déplacement de la pince de préhension au moyen du bras manipulateur robotisé de manière à positionner et le cas échéant à déplacer le produit qui est tenu en porte-à-faux par la pince de préhension par rapport à l'unité de mesure 3D et acquisition numérique au moyen de l'unité de mesure 3D de la géométrie en trois dimensions d'au moins une partie du produit à traiter, et de préférence au moins de toute la partie du produit qui est en porte-à faux par rapport à la pince de préhension,
- déplacement de la pince de préhension au moyen du bras manipulateur robotisé, de manière à positionner le produit tenu par la pince de préhension, par rapport à l'unité traitement,
- traitement automatique dudit produit, au moyen de l'unité traitement, en fonction au moins de la géométrie en trois dimensions de tout ou partie de ce produit, qui a été acquise numériquement au moyen de l'unité de mesure 3D, le produit étant de préférence tenu et le cas échéant éventuellement déplacé au moyen de la pince de préhension au cours du traitement.

Plus particulièrement, dans une variante particulière de réalisation, la préhension du produit est effectuée en pinçant le produit entre la face de préhension de la pince de préhension et tout ou partie des doigts de préhension de la pince de préhension.

L'invention a également pour objet une utilisation de l'installation de susvisée pour traiter automatiquement un produit rigide, plus particulièrement pour découper automatiquement un produit rigide, plus particulièrement encore pour découper automatiquement en tranches un produit rigide, notamment en tranches de poids sensiblement constant.

Plus particulièrement, le produit rigide est un produit alimentaire surgelé, et plus particulièrement un poisson surgelé ou une pièce de viande surgelée.

L'invention a également pour objet un programme informatique comprenant un moyen de code de programme informatique apte à être exécuté par des moyens électroniques de commande d'une installation susvisée, et permettant, lorsqu'il est exécuté par ces moyens électroniques de commande, la mise en oeuvre des étapes du procédé de traitement susvisé.

Certains des aspects suivants ne font pas partie de l'objet revendiqué mais sont indiqués à titre illustratif. Selon un autre aspect, une pince de préhension pour robot permet de saisir et de manipuler de manière fiable un produit rigide, et en particulier un produit rigide qui peut être glissant et/ou qui peut présenter une géométrie en trois dimensions irrégulière et non identique d'un produit à l'autre, tel que par exemple un produit alimentaire surgelé, et notamment un poisson surgelé ou une pièce de viande surgelée.

Selon cet autre aspect, une pince de préhension pour robot, permet de saisir et de manipuler un produit rigide, et de mettre en oeuvre une mesure de la géométrie en trois dimensions du produit en palliant les inconvénients susvisés.

Il est également envisagé une pince de préhension pour robot, ladite pince de préhension comportant une face de préhension et plusieurs doigts de préhension, chaque doigt de préhension comportant une extrémité de préhension, qui est orientée vers la face de préhension, et étant mobile en translation linéaire par rapport à la face de préhension, le long d'un axe de translation, qui est perpendiculaire à la face de préhension, la pince de préhension comportant des moyens d'actionnement des doigts, qui sont aptes à commander le déplacement, simultané ou non, des doigts entre une position rentrée des doigts et une configuration de préhension des doigts, dans laquelle chaque doigt est déplacé indépendamment des autres doigts en direction de la face de préhension, jusqu'à dans une position, qui peut être différente d'un doigt à l'autre, et dans laquelle le doigt est apte à être bloqué en butée et en pression contre une surface interposée entre la face de préhension et l'extrémité de préhension du doigt.

Plus particulièrement, cette pince de préhension peut comporter les caractéristiques additionnelles et facultatives ci-après, prises isolément ou en combinaison les unes avec les autres :
- la face de préhension comporte des rugosités de surface améliorant l'accrochage d'un produit.
- Les rugosités de surface sont formées par des rainures.
- la pince de préhension comporte une butée de calage permettant de bloquer en translation, dans une direction parallèle à la face de préhension, un produit qui est en contact avec la face de préhension de la pince de préhension.
- ladite butée de calage et la face de préhension forment une équerre.
- chaque doigt comporte une tige qui fait partie intégrante d'un actionneur linéaire ou qui est fixée rigidement à un actionneur linéaire.
- chaque actionneur linéaire est un vérin.
- chaque actionneur linéaire est un vérin à commande pneumatique, hydraulique, ou électrique et plusieurs doigts, et de préférence tous les doigts, sont aptes à être actionnés simultanément au moyen de la même source de fluide ou de la même source d'alimentation électrique.
- au moins un doigt, et de préférence chaque doigt, comporte une pointe rigide formant l'extrémité de préhension du doigt.

Il est également envisagé un robot équipé d'une pince de préhension susvisée.

Plus particulièrement, ce robot équipé d'une pince de préhension peut comporter les caractéristiques additionnelles et facultatives ci-après, prises isolément ou en combinaison les unes avec les autres :
- le robot comporte un bras manipulateur robotisé à l'extrémité duquel est montée ladite pince de préhension.
- le bras manipulateur robotisé est un bras à six axes de rotation motorisés.
- la pince de préhension est apte à pivoter autour d'un axe de rotation motorisé et orienté perpendiculairement à l'axe de translation des doigts.

Il est également envisagé une utilisation de la pince de préhension susvisée ou du robot susvisé équipé d'au moins une pièce de préhension, pour saisir un produit rigide par une de ses extrémités et pour manipuler ledit produit rigide en le tenant en porte-à-faux.

Il est également envisagé un procédé de manipulation d'un produit rigide au moyen de la pince de préhension susvisée ou du robot susvisé équipé d'une pince de préhension, dans lequel on saisit un produit rigide en pinçant une de ses extrémités entre la face de préhension et tout ou partie des doigts de préhension de la pince de préhension, et on manipule le produit rigide qui est tenu en porte-à-faux par la pince de préhension.

Plus particulièrement, ce procédé peut comporter les caractéristiques additionnelles et facultatives ci-après, prises isolément ou en combinaison les unes avec les autres :
- on positionne et le cas échéant on déplace le produit, qui est tenu en porte-à-faux par la pince de préhension, par rapport à une unité (2) de mesure 3D, et on réalise une acquisition numérique, au moyen de cette unité de mesure 3D, de la géométrie en trois dimensions d'au moins une partie du produit, et de préférence au moins de toute la partie du produit qui est en porte-à faux par rapport à la pince de préhension.
- on positionne et le cas échéant on déplace le produit qui est tenu en porte-à-faux par la pince de préhension, pour traiter automatiquement ledit produit.
- on positionne et le cas échéant on déplace le produit, qui est tenu en porte-à-faux par la pince de préhension, pour traiter automatiquement ledit produit, en fonction au moins de la géométrie en trois dimensions de tout ou partie de ce produit, qui a été acquise numériquement au moyen de l'unité de mesure 3D.
- on fait coopérer la pince de préhension avec un plateau, qui sert de support au produit tenu par la pince de préhension, de manière à déplacer en translation, par rapport au plateau la pince de préhension tenant le produit, en guidant en translation la pince de préhension au moyen dudit plateau.
- on fait coopérer la pince de préhension avec un plateau mobile, qui sert de support au produit tenu par la pince de préhension, de manière à entraîner le plateau mobile au moyen de la pince de préhension.
- le plateau comporte une lumière de guidage et la pince de préhension comporte un doigt d'indexage apte à être introduit dans ladite lumière de guidage.
- on découpe automatiquement le produit rigide tenu par la pince de préhension.
- on découpe automatiquement en tranches le produit rigide tenu par la pince de préhension, et plus particulièrement en tranches de poids sensiblement constant.

Plus particulièrement, le produit rigide est un produit alimentaire surgelé, et plus particulièrement un poisson surgelé ou une pièce de viande surgelée.

### Brève description des figures

- la figure 1 est une vue d'ensemble d'une variante particulière d'installation de découpe automatisée en tranches de produits rigides P, mettant en oeuvre deux bras manipulateurs robotisés ;
- la figure 2 est une vue isométrique en perspective d'une variante préférée de réalisation d'une pince de préhension ;
- la figure 3 est une vue isométrique en perspective de la pince de préhension la figure 2, montée à l'extrémité d'un bras manipulateur de l'installation de la figure 1, et positionnée par rapport à un produit P prêt à être saisi ;
- la figure 4 est une vue en coupe transversale de la pince et du produit de la figure 3, les doigts de préhension de la pince étant en position rentrée ;
- la figure 5 est une vue isométrique en perspective de ladite pince de préhension et du produit saisi et tenu en porte-à-faux au moyen de cette pince de préhension ;
- la figure 6 est une vue en coupe transversale de la pince et du produit de la figure 5, les doigts de préhension de la pince étant en position sortie ;
- la figure 7 est un schéma synoptique montrant les principaux éléments de l'installation de la figure 1 ;
- la figure 8 est un exemple d'organigramme de fonctionnement de l'installation de la figure 1 ;
- la figure 9 représente de manière schématique et en vue de dessus un produit P tenu en porte-à-faux et positionné dans l'unité de scannage 3D de l'installation de la figure 1 au moyen d'un bras manipulateur robotisé ;
- la figure 10 représente de manière schématique et en vue de côté un produit P tenu en porte-à-faux et positionné dans l'unité de scannage 3D de l'installation de la figure 1 au moyen d'un bras manipulateur robotisé et un système de convoyage de cette installation transportant les produits P à traiter les uns derrière les autres jusqu'à une zone de préhension ;
- la figure 11 est une représentation schématique de l'image d'un produit P tenu à une extrémité par la pince de préhension, permettant de mieux visualiser et comprendre la découpe en tranches à poids constant du produit ;
- la figure 12 est une vue de détail de l'installation de la figure 1 montrant la zone de préhension des produits, l'unité de scannage 3D étant positionnée au-dessus de cette zone de préhension et l'entrée de l'unité de découpé en tranches étant positionnée latéralement sur un côté de la zone de préhension ;
- la figure 13 correspond à la vue de détail de la figure 12, lorsqu'un produit est saisi dans la zone de préhension au moyen de l'une des pinces de préhension ;
- les figures 14 et 15 correspondent à la vue de détail de la figure 12 pendant les opérations de scannage 3D de la pince de préhension et du produit P tenu en porte-à-faux ;
- la figure 16 correspond à la vue de détail de la figure 12 pendant les opérations de découpes en tranches du produit P tenu par la pince de préhension.

### Description détaillée

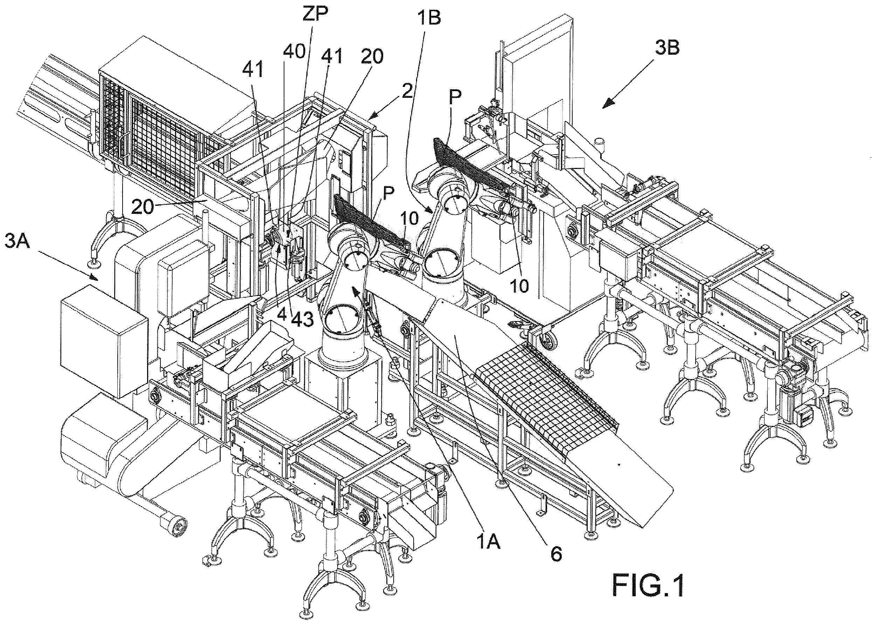

On a représenté sur la figure 1, un exemple particulier d'installation de traitement conforme à l'invention, et plus particulièrement de découpe automatisée en tranches de produits rigides P, tels que par exemple des produits alimentaires surgelés (poissons, viande,...)

L'invention trouve préférentiellement son application à la découpe en tranches de produits surgelés, tels que par exemple des poissons surgelés ou des pièces de viandes surgelées, mais n'est pas limitée à cette seule application, Elle peut plus généralement s'appliquer au traitement automatisé de tout type de produits rigides, telle que par exemple la découpe de bois (troncs ou rondins de bois).

En référence à la variante particulière de réalisation des figures 1 à 3, l'installation de découpe en tranches comporte deux bras manipulateurs robotisés 1A et 1B (figure 1), qui de préférence et de manière connue en soi ont chacun six axes de rotation motorisés.

L'installation comporte également (Figure 1) une unité 2 de mesure 3D, qui est associée aux deux bras manipulateurs robotisés 1A et 1B et deux unités 3A, 3B de découpe automatisée, de type scie à ruban, qui sont associées chacune respectivement à l'un des bras manipulateur 1A ou 1B.

Chaque bras manipulateur robotisé 1A, 1B est équipé à son extrémité d'une pince de préhension 10.

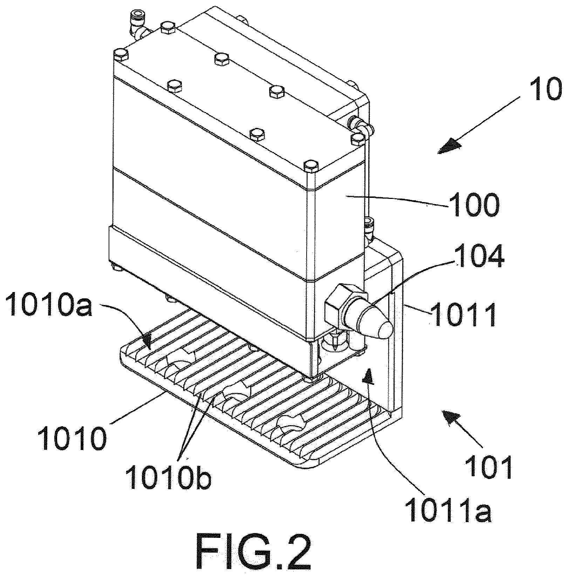

Une variante préférée de réalisation de cette pince de préhension 10 est représentée sur la figure 2.

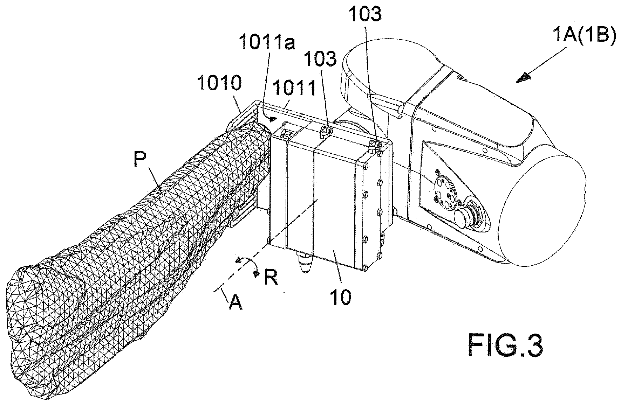

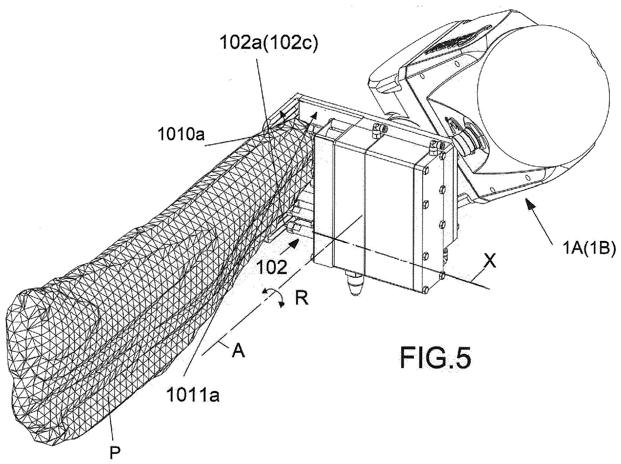

Cette pince de préhension 10 est montée à l'extrémité du bras manipulateur robotisé 1A, 1B, de manière à pouvoir pivoter (figures 3 et 5) par rapport à l'extrémité du bras robotisé 1A ou 1B autour d'un axe de rotation A, qui constitue un des six axes de rotation du bras manipulateur 1A ou 1B. De manière connue en soi, cet axe A est motorisé de manière à permettre la commande de la rotation dans un sens ou dans l'autre (figures 3 et 5 / double flèche R) de la pince de préhension 10 autour de l'axe A.

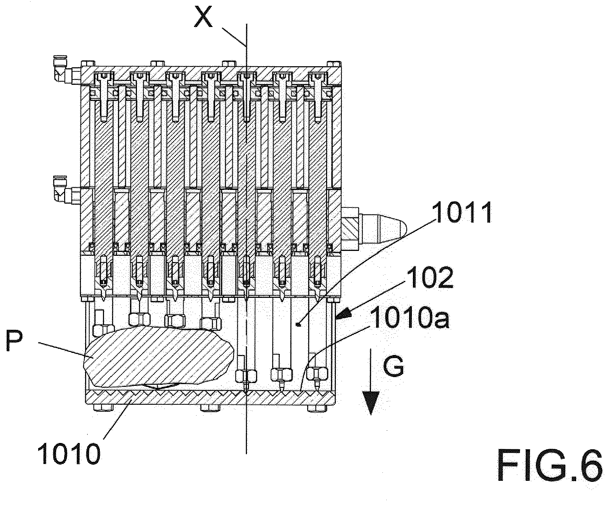

D'une manière générale, cette pince de préhension 10 est conçue pour saisir par une extrémité et tenir en porte-à-faux de manière stable un produit rigide P (Figures 5 et 6).

Dans le cadre général de l'invention, cette pince de préhension peut est être constituée d'une pince classique comportant par exemple deux mâchoires articulées en rotation l'une par rapport à l'autre.

De préférence néanmoins, on met en oeuvre une pince de préhension 10 spécifique du type de celle de la figure 2, qui a été développée pour être adaptée à des produits rigides du type notamment produits alimentaires surgelés, qui sont glissants et présentent une géométrie de surface qui n'est pas plane, et qui est irrégulière et spécifique du produit et non reproductible à l'identique d'un produit à l'autre.

En référence à la figure 2, cet outil de préhension 10 comporte un boîtier 100, auquel est fixé un support 101, par exemple en acier inoxydable, comportant une plaque de préhension 1010 et une plaque 1011 à fonction de butée de calage, qui forme une équerre avec la plaque de préhension 1010.

La plaque de préhension 1010 comporte une face de préhension 1010a qui est destinée à être en contact avec le produit P.

De préférence, cette face de préhension 1010a n'est pas lisse, mais présente des rugosités de surface 1010b qui facilitent l'accrochage du produit P glissant.

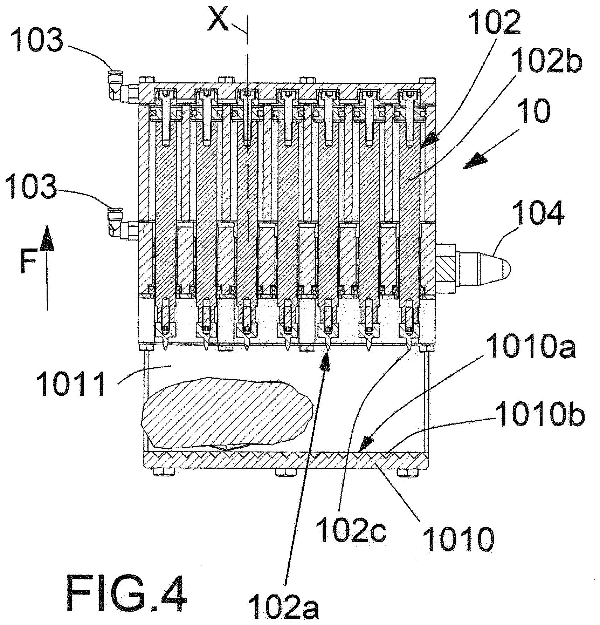

Dans cette variante de réalisation, ces rugosités de surface 1010b sont réalisées sous la forme de rainures parallèles ayant plus particulièrement un profil en section transversale en forme de V (figure 4).

La plaque 1011 à fonction de butée de calage comporte une face de calage plane 1011a qui est orientée perpendiculairement à la plaque de préhension 1010 et perpendiculairement à l'axe de rotation A de la pince 10. Cette face de calage plane 1011a permet de bloquer en translation une extrémité d'un produit P saisi au moyen de la pince 10 dans une direction parallèle à la face de préhension 1010a de la pince de préhension.

La pince de préhension 10 comporte également une pluralité de doigts de préhension rigides et indépendants 102.

Plus particulièrement ces doigts de préhension 102 sont logés au moins en partie dans le boitier 100.

Chaque doigt 102 comporte une extrémité de préhension 102a, qui est orientée vers la face de de préhension 1010a de la plaque de préhension 1010.

Dans la variante particulière illustrée sur la figure 4, chaque doigt 102 comporte une tige 102b, à l'extrémité de laquelle est fixée une pointe rigide 102c formant l'extrémité de préhension 102a du doigt 102.

Chaque doigt 102 est mobile en translation linéaire indépendamment des autres doigts 102 par rapport à la face de préhension 100b, le long d'un axe de translation X, qui est parallèle à la face de calage plane 1011a et perpendiculaire à la face de préhension 1010a.

L'axe de rotation A de la pince de préhension 10 est perpendiculaire à l'axe X de translation des doigts 102 et parallèle à la face de préhension 1010a de la pince de préhension 10.

Plus particulièrement chaque tige 102b est une tige d'un actionneur linéaire, qui permet sur commande le déplacement en translation linéaire de la tige 102b, et donc du doigt 102, le long de son axe de translation X, dans une direction ou dans l'autre. Dans une autre variante chaque tige 102b peut ne pas faire partie intégrante de l'actionneur linéaire, mais peut être fixée rigidement à un actionneur linéaire.

Chaque actionneur permet le déplacement en translation linéaire du doigt 102 correspondant le long de l'axe X et dans la direction F opposée à la face de préhension 1010a, jusque dans une position rentrée à l'intérieur du boîtier 100, tel qu'illustré pour les doigts 102 de la figure 4.

Dans cette position de la figure 4, les doigts 102 sont quasiment entièrement logés à l'intérieur du boitier 100, de telle sorte qu'un espace suffisant est ménagé entre la surface de préhension 1010ab et les extrémités de préhension 102a de ces doigts 102.

Chaque actionneur permet en outre le déplacement en translation linéaire du doigt 102 correspondant le long de l'axe X et en direction de la face de préhension 102 (Figure 6/ flèche G), jusqu'à une position d'arrêt automatique en butée du doigt 102, dans lequel le doigt 102 peut être bloqué en translation contre une surface fixe et l'actionneur exerce une force permettant au doigt 102 d'exercer une pression sur cette surface fixe dans la direction de déplacement (G) du doigt 102.

Chaque actionneur peut être plus particulièrement un vérin linéaire, qui peut plus particulièrement être à commande pneumatique, hydraulique ou électrique.

Tous les vérins sont, de manière connue en soi, alimentés par une source de fluide (air comprimé ou huile) ou par une même source d'alimentation électrique (vérins électriques), qui est commune à tous les doigts 102 et permet de commander simultanément le déplacement en translation linéaire de tous les doigts 102 dans la même direction (F ou G).

Sur la figure 3, les deux raccords 103 sont prévus pour le raccordement à une source de fluide (non représentée sur les figures).

Le déplacement en translation linéaire des doigts 102 peut avantageusement se faire simultanément pour l'ensemble des doigts 102. Néanmoins, dans une autre variante, ce déplacement des doigts pourrait ne pas se faire simultanément pour l'ensemble des doigts 102, mais de manière séquentielle par groupe successifs de un ou plusieurs doigts.

Dans la variante particulière de figures annexées, la pince de préhension 10 comporte une pluralité de doigts 102 alignés, en l'occurrence sept doigts alignés. L'invention n'est pas limitée à cette configuration particulière. En particulier, en fonction du type de produit P, et notamment de ses dimensions, le nombre de doigts 102 peut être plus ou moins important. En outre, il est également possible de concevoir un outil de préhension 10 comportant plusieurs lignes parallèles et espacées de doigts 102, le nombre de doigts 102 par ligne pouvant être identique ou non, et les doigts 102 de lignes différentes pouvant être alignés ou non sous forme de colonnes de doigts. Il est également possible de concevoir une pince de préhension 10 comportant une matrice de doigts 102 dans laquelle les doigts ne sont pas nécessairement alignés dans une direction donnée.

En fonctionnement, pour réaliser la préhension d'un produit P dont une extrémité (figures 3 et 5) d'une part est positionnée en butée contre la face de calage 1011a et d'autre part est en contact avec la face de préhension 1010a, les doigts 102 étant en en position rentrée, on commande l'actionnement de tous les doigts 102 de manière à les faire sortir du boîtier 10 en les déplaçant en direction (G) de la face de préhension 1010a.

Lorsque l'extrémité de préhension 102a d'un doigt rencontre une surface (Figure 6), qui peut être une partie de la surface du produit P (cas des quatre doigts 102 de gauche de la figure 6) ou qui peut être la surface de la face de préhension 1010a lorsqu'il n'y a pas de partie de produit P interposée entre le doigt 102 et cette surface préhension 1010a (cas des trois doigts 102 de droite de la figure 6), il est automatiquement bloqué en translation et en pression contre cette surface.

Dans cette position bloquée, ce doigt 102 exerce une pression sur cette surface dans la direction de déplacement (G) du doigt 102. Cette pression exercée par tout ou partie des doigts 102 sur le produit P doit être suffisante pour que le produit P soit pincé entre les doigts 102 et la face de préhension 1010a, avec une force suffisante pour être tenu en porte-à-faux et pouvoir être manipulé dans l'espace par le bras robotise 1A ou 1B, sans risque de décrochage.

Il en résulte que l'outil de préhension 10 s'adapte automatiquement (Figure 6) aux dimensions et au profil irrégulier et non reproductible de la surface du produit P. En outre la pression exercée sur le produit P étant répartie sur tous les doigts 102, on réduit les risques d'endommager le produit.

Dans la variante particulière de réalisation des figures annexées, la force de pression exercée par le doigt, lorsqu'un doigt 102 est déplacé en contact avec la surface du produit P, est suffisamment importante pour que la pointe 102c à l'extrémité du doigt 102 pénètre dans le produit P (figure 6), ce qui permet d'améliorer la tenue du produit P, et est notamment très utile en cas de produit P glissant. Cette force de pression doit toutefois être suffisamment faible pour ne pas faire pénétrer le doigt 102 plus en profondeur dans le produit (au-delà de la pointe) de manière à ne pas endommager de manière préjudiciable le produit P.

En référence à la figure 2, la pince de préhension 10 comporte également un doigt d'indexage 104 qui est destiné à coopérer avec le plateau d'une unité de découpe 3A ou 3B tel que cela sera expliqué plus en détail ultérieurement.

L'unité 2 de mesure 3D est connue en soi et ne sera pas donc décrite en détails.

Elle peut être constituée par toute unité permettant de scanner en 3D un produit P, de préférence sans contact, de manière à acquérir de manière automatique par mesure, et éventuellement calcul, des données numériques D caractérisant la géométrie en trois dimensions d'un produit P.

L'unité 2 de de scannage 3D peut notamment comporter une ou plusieurs caméras fixes ou mobiles.

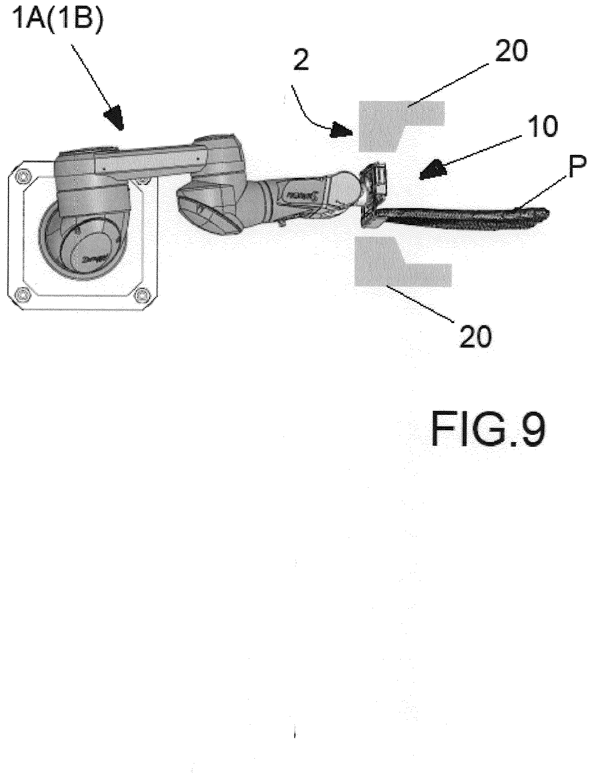

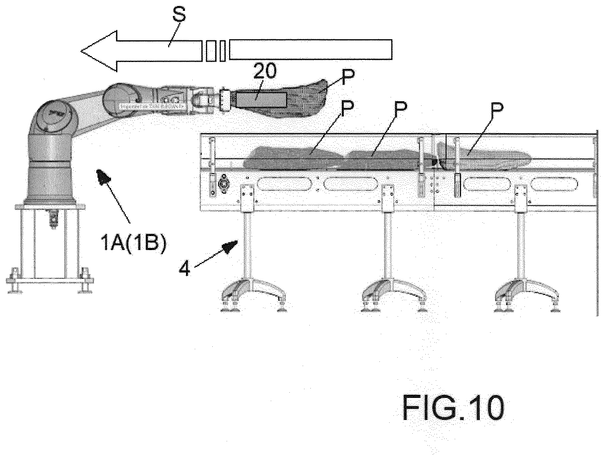

Plus particulièrement, en référence aux figures 9 et 10, l'unité 2 de de scannage 3D peut comporter deux caméras 20 fixes en vis-à-vis l'une de l'autre, entre lesquelles un produit P tenu en porte-à-faux au moyen de la pince de préhension 10 peut être déplacé par rapport aux caméras 20 au moyen du bras robotisé 1A ou 1B. Chaque caméra 20 permet de scanner en 3D la surface complète de l'une des deux faces du produit P et des moyens de calcul de l'unité 2 de scannage 3D permettent, à partir de ces surfaces scannées, de reconstituer automatiquement par calcul la géométrie complète en trois dimensions dudit produit P.

Dans une autre variante, les caméras 20 peuvent être mobiles et le produit P tenu en porte-à-faux au moyen de la pince de de préhension 10 peut être déplacé jusque dans une position de scannage fixe au moyen du bras robotisé 1A ou 1B. L'acquisition des surfaces des deux faces du produit P est effectuée en déplaçant les deux caméras 20 par rapport au produit P.

Dans une autre variante, l'unité 2 de mesure 3D peut également être constituée par un système de vision à plusieurs caméra fixes ou mobiles, permettant d'acquérir sous des angles différents des images numériques d'un produit P positionné de manière fixe dans les champs de vision des caméras ou déplacé dans les champs de vision des caméras. Ce système de vision comporte des moyens de traitement d'images permettant à partir des images numériques capturées du produit P, de reconstituer automatiquement par calcul la géométrie en trois dimensions dudit produit P.

Dans la variante particulière de la figure 1, et de manière non limitative de l'invention l'unité 2 de mesure 3D est positionnée au-dessus de la zone de de préhension ZP, ce qui permet de diminuer l'encombrement de l'installation et de réduire les déplacements de chaque pince de préhension 10 pour réaliser les opérations de numérisation 3D, notamment scannage 3D, d'un produit P tenu en porte-à-faux par une pince de préhension.

Dans une autre variante de réalisation, le positionnement de l'unité 2 de mesure 3D par rapport à a zone préhension ZP d'un produit pourrait être différent.

L'installation comporte également un système de convoyage 4, qui permet d'acheminer les produits P les uns derrière les autres à l'entrée de l'installation jusqu'à une zone de préhension accessible par chacun des deux bras manipulateurs robotisés 1A et 1B.

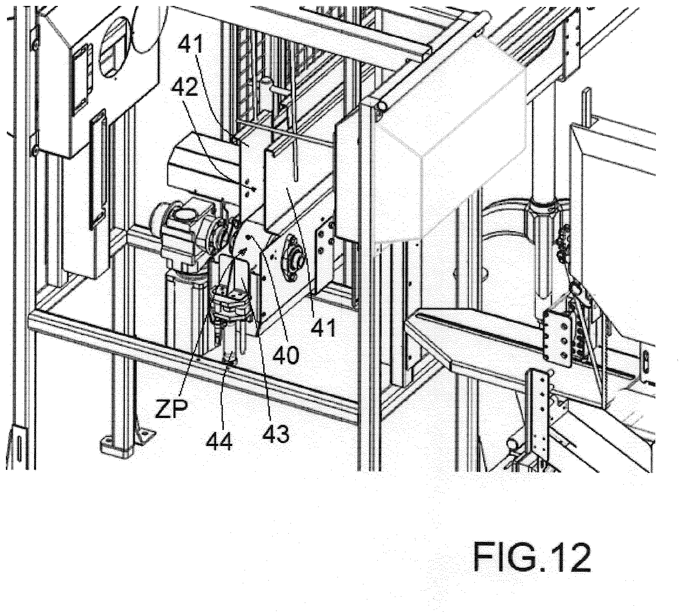

Plus particulièrement, ce système de convoyage 4 comprend notamment (figures 1 et 12) une bande de transport sans fin 40 qui permet d'acheminer les produits P les uns derrière les autres et deux parois de guidage 41 verticales, qui sont espacées et fixées au-dessus de la partie extrême aval de la bande de transport sans fin 40, de manière à former un couloir de positionnent et guidage 42 des produits P. Ce système de convoyage 4 comporte également une plaque de butée 43, qui est positionnée à proximité de la sortie du couloir de positionnent et guidage 42, et qui fixée à la tige mobile d'un vérin vertical 44 permettant de la déplacer verticalement entre une position basse illustrée sur la figure 1 et une position haute, dans laquelle elle permet, en sortie du couloir de positionnement et guidage 42, le blocage en translation de l'extrémité d'un produit P encore supporté par la bande de transport sans fin 40.

La zone de préhension ZP de chaque produit P par l'un ou l'autre des deux bras manipulateurs robotisés 1A et 1B se situe entre la sortie de ce couloir de guidage 42 et cette plaque de butée 43.

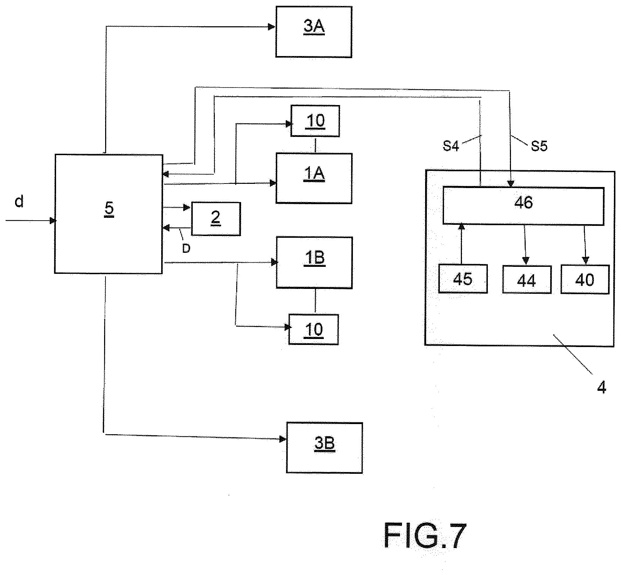

Ce système de convoyage 4 comprend également un capteur de présence 45 (figure 7), de type cellule photoélectrique, qui permet automatiquement de détecter la présence d'un produit P sur la bande de transport sans fin 40 en butée contre la plaque de butée 43 en position haute.

Ce système de convoyage 4 comporte également (figure 7) un automatisme de commande 46, qui est implémenté par exemple au moyen d'un automate programmable, et qui est conçu pour commander le vérin 44 et le moteur de la bande de transport sans fin 40 de manière à acheminer et positionner un nouveau produit P à saisir dans la zone de préhension ZP à chaque fois qu'il en reçoit une commande S5 (figure 7)

Plus particulièrement, lorsqu'il en reçoit la commande (S5), cet automatisme 46 est programmé par exemple pour exécuter la routine suivante.

Il commande le vérin 44 de manière à amener la plaque de butée 43 en position haute et il commande la mise en route du moteur de la bande de transport sans fin 40.

Lorsque le capteur 45 détecte la présence d'un produit P en butée contre la plaque de butée 43, l'automatisme 46 commande l'arrêt du moteur de la bande de transport sans fin 40, puis commande le vérin 44 de manière à ramener la plaque de butée 43 en position basse, c'est-à-dire dans une position dans laquelle elle ne fait pas obstacle ultérieurement au positionnement de la pince de préhension 10 pour saisir le produit P. En fin de cycle, l'automatisme de commande 46 se met en attente d'une nouvelle commande (S5) pour le positionnement du produit P suivant en butée contre la plaque de butée 43.

L'installation comporte également des moyens électroniques de commande 5 (figure 7) qui sont programmés pour piloter le déplacement (rotations) dans l'espace des bras manipulateurs robotisés 1A, 1B, pour commander chaque pince de préhension 10, pour commander le système de convoyage 4, en particulier via le signal de commande S5 susvisé, et pour commander l'unité 2 de scannage 3D et chaque unité de découpe 3A, 3B. L'unité 2 de scannage 3D communique également avec ces moyens électroniques de commande 5, de manière à ce que ces moyens électroniques de commande 5 puissent récupérer les données D de scannage 3D, qui sont acquises par l'unité de scannage 2 à chaque opération de scannage 3D d'un produit P.

Ces moyens électroniques de commande 5 peuvent par exemple être implémentés sous la forme d'au moins automate programmable ou de tout autre moyen équivalent, apte à exécuter un programme de commande spécifique.

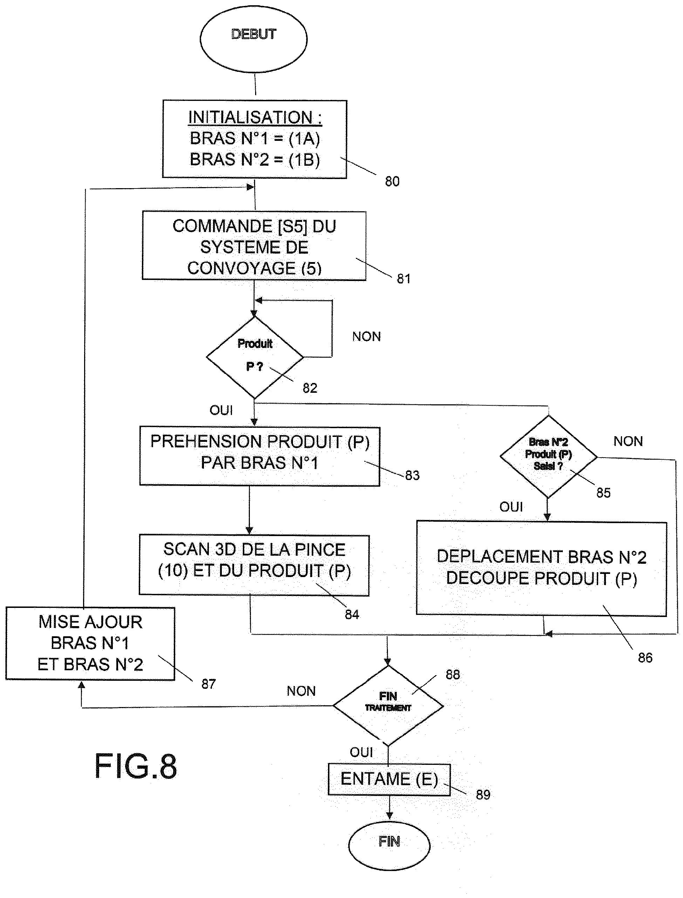

Un exemple particulier, et non limitatif de l'invention, de programme de commande va à présent être détaillé en référence à l'organigramme de la figure 8.

En référence à l'organigramme particulier de la figure 8, le programme de commande est initialisé (étape 80) de telle sorte que la variable « Bras N°1 » corresponde au bras robotisé 1A et que la variable « Bras N°2 » corresponde au bras robotisé 1B.

Ensuite (étape 81), les moyens électroniques de commande 5 commandent (Figure 7/ signal S5) le système de convoyage 4, afin que celui positionne un produit P dans la zone de préhension ZP tel que précédemment décrit.

Lorsque les moyens électroniques de commande 5 sont informés (figure 7/ signal S4) par l'automatisme 46 du système de convoyage 4 qu'un produit P prêt être saisi est positionné dans la zone de préhension ZP (test 82), les moyens électroniques de commande 5 commandent, au moyen du bras robotisé N°1, le déplacement et le positionnement de la pince de préhension 10 par rapport au produit P à saisir, tel qu'illustré sur les figure 3 et 4.

Dans cette variante l"extrémité du produit P est en contact avec la face de préhension 1010a de la pince 10 et est calée contre la face de calage plane 1011a de la pince 10.

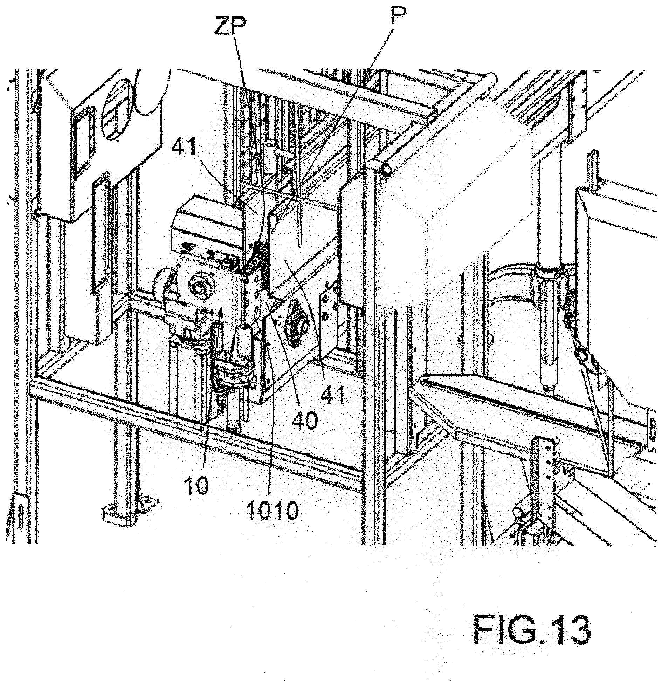

Ensuite, les moyens électroniques de commande 5 commandent la sortie des doigts de préhension 102 de la pince de préhension 10 à l'extrémité de ce bras N°1, de telle sorte que le produit P sur le convoyeur soit saisi par son extrémité par la pince de préhension 10, tel qu'illustré sur la figure 13, l'extrémité du produit P étant pincée entre la surface préhension 1010a et tout ou partie des doigts de préhension 102 tel qu'illustré par exemple sur les figures 5 et 6.

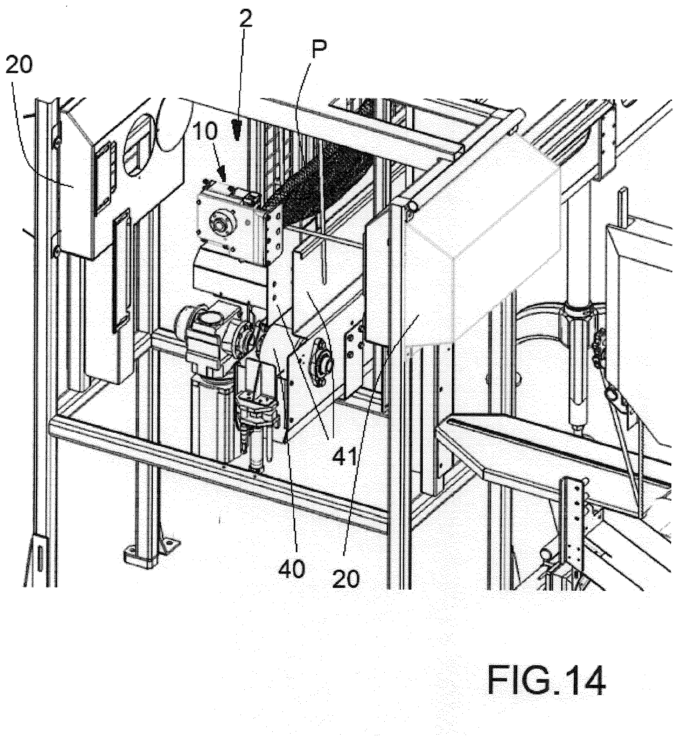

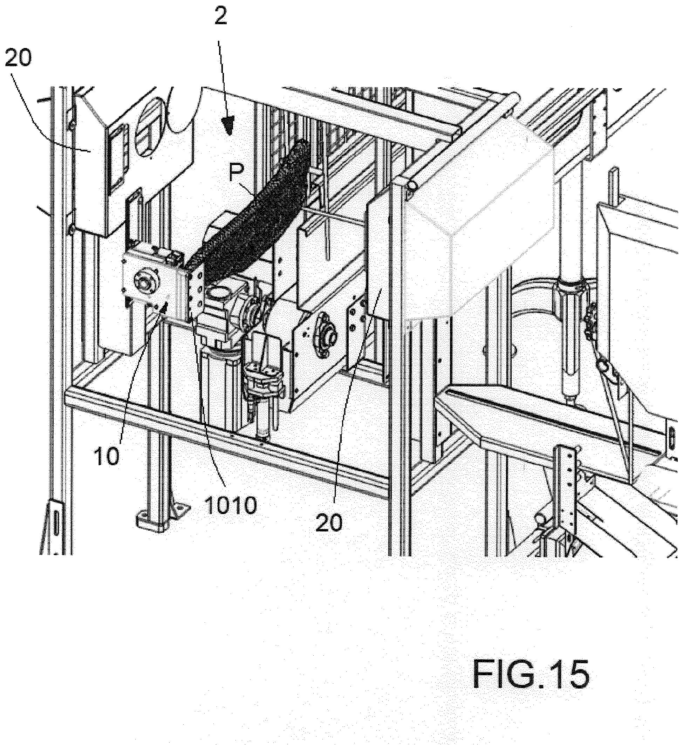

Ensuite (étape 84), les moyens électroniques de commande 5 commandent l'unité 2 de scannage 3D et commandent le déplacement du bras robotisé N°1 de telle sorte que le produit P, qui est porté en porte-à-faux, soit positionné et déplacé dans l'unité 2 de scannage 3D (figures 14 et 15), de manière à réaliser une acquisition numérique de la géométrie 3D du produit P.

En référence à l'exemple particulier des figures 9 et 10, le produit P est initialement positionné dans l'unité de scannage 3D de telle sorte que la pince de préhension 10 est initialement positionnée entre les deux caméras 20 (figure 9), de manière à démarrer les opérations de scannage par une numérisation 3D de la pince de préhension 10 et de l'extrémité du produit P saisi par la pince 10. Ensuite, les opérations de scannage 3D se poursuivent en déplaçant entre les deux caméras 20 dans la direction S (figure 10), au moyen du bras robotisé, la pince de préhension 10 et le produit P saisi et porté en porte-à-faux, de manière à réaliser une numérisation en trois dimensions de tout le produit P.

A l'issue de l'étape 84 (opérations de scannage 3D), les moyens électroniques de commande 5 ont enregistré, en vue de leur traitement ultérieur (au cours du cycle de fonctionnement suivant) les données de numérisation 3D qui ont été acquises par l'unité de scannage 3D et qui caractérisent au moins la géométrie en trois dimensions du produit P.

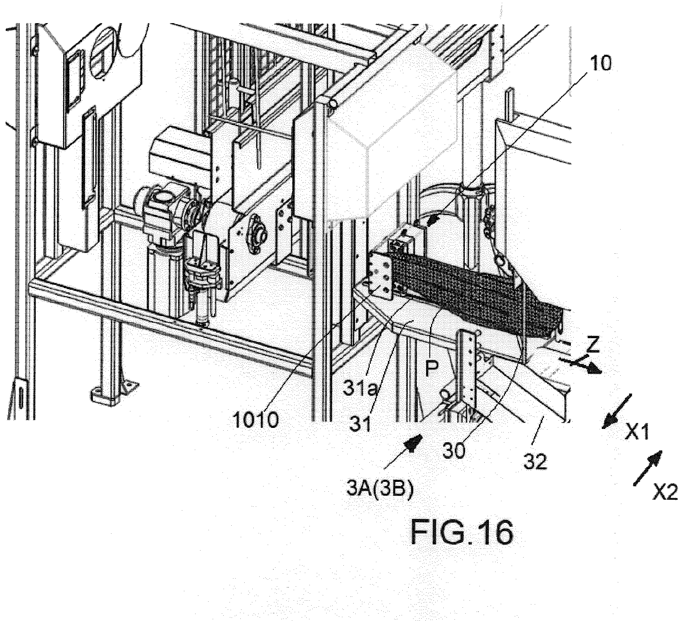

Parallèlement aux étapes 83 et 84 susvisées, les moyens électroniques de commande 5 commandent (étape 86) l'unité de découpe associée à l'autre bras robotisé N°2 et le déplacement de cet autre bras robotisé N°2, de manière à positionner (figure 16) et à déplacer le produit P saisi par ce bras au cycle précédent (dans le cas où un produit P a effectivement été saisi au cycle précédent / test 85) par rapport aux moyens de découpe 30 (scie à ruban) de l'unité de découpe 3A ou 3B associée à ce bras, et à réaliser une découpe automatique en tranches du produit.

Par exemple, dans la variante particulière de la figue 16, le bras robotisé pose le produit P sur un plateau 31 mobile de l'unité de découpe 3A ou 3B. Ce plateau 31 comporte une lumière de guidage rectiligne 31a dans laquelle pénètre le doigt d'indexage 104 de la pince de préhension 10 lors de la pose du produit P sur le plateau.

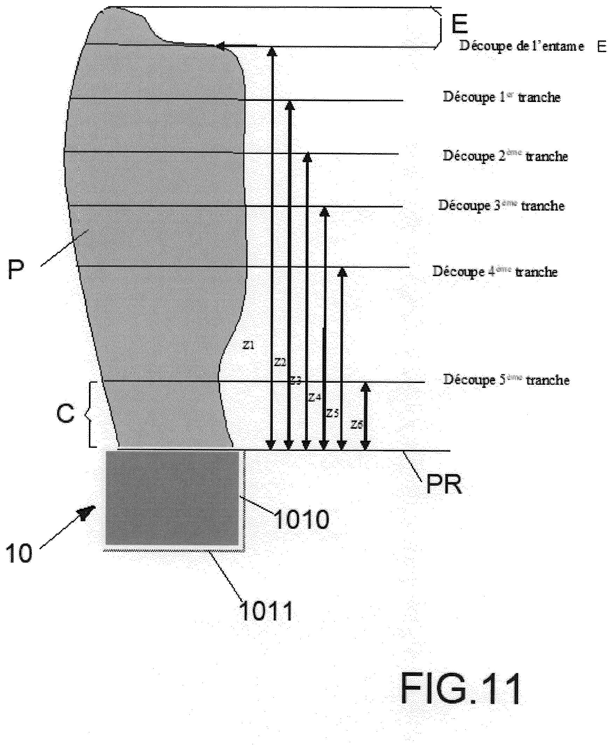

Les opérations de découpe automatisée en tranches sont réalisées en commandant le déplacement du bras robotisé avec le produit P tenu par la pince de préhension 10 de manière cyclique, jusqu'à ce que tout le produit P soit découpé en tranches, et en mettant en oeuvre de manière répétée le cycle de fonctionnements suivant, une fois le doigt d'indexage 104 de la pince de préhension 10 introduit dans la lumière de guidage 31a du plateau 31 :
- déplacement de la pince 10 tenant le produit P par rapport au plateau 31 dans la direction Z parallèle à la lumière de guidage rectiligne 31a du plateau (figure 16), de manière à positionner le produit P à une côte Zn ( figure 11/ côtes Zn, n variant de 1 à 6) prédéfinie et calculée par les moyens électroniques de commande 5 ; au cours de ce déplacement, la pince 10 est guidée en translation dans la direction Z par le doigt d'indexage 104, qui coulisse dans la lumière 31a du plateau 31 ;
- déplacement de la pince 10, tenant le produit P, dans la direction X1 perpendiculaire à la lumière rectiligne 31a du plateau 31 (figure 16) sur une distance prédéfinie de manière à entraîner en translation linéaire le plateau 31 par l'intermédiaire du doigt d'indexage 104 de la pince 10, et à réaliser la coupe de l'entame E ou d'une tranche du produit P au moyen de la scie à ruban 30 ; l'entame E ou la tranche de produit tombe par gravité dans la goulotte de réception 32 ;
- déplacement de la pince 10 tenant le produit P dans la direction inverse X2 perpendiculairement à la lumière rectiligne 31a du plateau (figure 16), de manière à repositionner, par l'intermédiaire du doigt d'indexage 104 de la pince 10, le plateau supportant le produit P en position initiale par rapport à la scie à ruban 30.

En référence à la figure 11, chaque côte Zn (figure 11/ côtes Z1 à Z6) est calculée à partir d'un plan de référence PR dans l'image scannée de la pince de préhension 10, ce plan de référence PR étant parallèle à la plaque de calage 1011 de la pince 10.

Dans une variante préférée de réalisation, on suppose que la densité d du produit est constante et chaque côte Z2 à Z5 (figure 11) est calculée par les moyens électroniques de commande 5 à partir de cette densité d et des données de numérisation caractérisant la géométrie 3D du produit P, de manière à découper successivement des tranches ayant sensiblement le même poids à l'exception de l'entame E du produit P (côte Z1) et de la chute C (côte Z6) du produit P. La densité d du produit est par exemple une variable, qui est paramétrable au moyen d'une interface utilisateur des moyens électroniques de commande 5. Le nombre de tranches découpées à poids constant peut être diffèrent d'un produit à l'autre et dépendra du poids de chaque tranche et de la géométrie 3D du produit.

Pour séparer l'entame E du reste des tranches de produits découpées, chaque unité de découpe 3A, 3B comporte, en aval de la goulotte de réception 32, un système de triage automatique comportant un moyen d'aiguillage mécanique, qui permet de séparer automatiquement, en début de coupe, l'entame E du produit P (première direction d'aiguillage) des tranches de produits (seconde direction d'aiguillage) qui ont été découpées à poids constant.

Dans une autre variante de réalisation de découpe en tranches du produit, la distance entre deux côtes successives Zn/Zn+1 pourrait être constante et prédéfinie.

A l'issue des deux étapes 84 et 86, si le traitement n'est pas terminé on redémarre un nouveau cycle de fonctionnement susvisé en inversant les bras de commande 1A et 1B (étape 87) pour le programme de commande, la variable « Bras N°1 » correspondant à pour ce nouveau cycle au bras robotisé 1B ( respectivement 1A) si au cycle précédent la variable « Bras N°1 » correspondait au bras robotisé 1A ( respectivement 1B) et la variable « Bras N°2 » correspondant au bras robotisé 1A (respectivement 1B) si au cycle précédent la variable « Bras N°2 » correspondait au bras robotisé 1B (respectivement 1A).

Lorsque la découpe en tranches du produit P est terminée (test 88), les moyens électroniques de commande 5 commandent le déplacement du bras robotisé N°2 et le déplacement en position rentrée des doigts 102 de la pièce de préhension 10, de manière à jeter dans un réceptacle ouvert 6 (figure 1), par exemple de type goulotte, l'entame E du produit P qui était encore tenue par la pince de préhension 10.

Le fonctionnement susvisé en parallèle (étapes 83 et 84 d'une part et étape 86 d'autre part) des deux bras robotisés permet avantageusement un gain de productivité.

Dans une variante simplifiée, l'installation peut comporter un seul bras 1A ou 1B et une seule unité de traitement 3A ou 3B associée à ce bras.

L'invention n'est pas limitée à une découpe tranches de produits, mais peut s'appliquer à tout type de traitement d'un produit rigide P, en fonction notamment des données de numérisation 3D de ce produit caractérisant la géométrie en trois dimensions du produit, ledit produit étant tenu en porte à faux par une de ses extrémités au moyen d'une pince de préhension d'un robot.

Plus généralement la pince de préhension peut être utilisée pour saisir un produit P rigide par une de ses extrémités et pour manipuler ledit produit P rigide en le tenant en porte-à-faux.

## Revendications

1. Installation de traitement d'un produit rigide (P), ladite installation comportant au moins un bras manipulateur robotisé (1A ou 1B), qui est équipé d'une pince de préhension (10) adaptée pour saisir par une extrémité et tenir en porte-à-faux un produit rigide (P), une unité (2) de mesure 3D permettant une acquisition numérique de la géométrie en trois dimensions d'au moins une partie d'un produit à traiter, une unité de traitement (3A ou 3B), et des moyens électroniques de commande (5), qui sont configurés pour piloter le déplacement dans l'espace de la pince de préhension (10) au moyen du bras manipulateur robotisé (1A ou 1B), pour commander la pince de préhension (10), et pour commander l'unité (2) de mesure 3D et l'unité de traitement (3A, 3B), de manière à réaliser les étapes successives suivantes pour chaque traitement d'un produit rigide :
- préhension au moyen de la pince de préhension (10) d'un produit rigide (P) à traiter, qui est saisi par une de ses extrémités et tenu en porte-à-faux par la pince de préhension,
- déplacement de la pince de préhension (10) au moyen du bras manipulateur robotisé (1A ou 1B) de manière à positionner et le cas échéant à déplacer le produit (P) qui est tenu en porte-à-faux par la pince de préhension (10) par rapport à l'unité (2) de mesure 3D et acquisition numérique au moyen de l'unité (2) de mesure 3D de la géométrie en trois dimensions d'au moins une partie du produit (P) à traiter, et de préférence au moins de toute la partie du produit (P) qui est en porte-à faux par rapport à la pince de préhension (10),
- déplacement de la pince de préhension (10) au moyen du bras manipulateur robotisé (1A ou 1B), de manière à positionner le produit (P) tenu par la pince de préhension (10), par rapport à l'unité traitement (3A ou 3B),
- traitement automatique dudit produit (P), au moyen de l'unité traitement (3A ou 3B), en fonction au moins de la géométrie en trois dimensions de tout ou partie de ce produit, qui a été acquise numériquement au moyen de l'unité (2) de mesure 3D, le produit (P) étant de préférence tenu et le cas échéant éventuellement déplacé au moyen de la pince de préhension (10) au cours du traitement.

2. Installation selon la revendication 1, dans laquelle l'unité (2) de mesure 3D est une unité de scannage 3D, et de préférence une unité de scannage 3D sans contact, et/ou dans laquelle le bras manipulateur robotisé (1A ou 1B) est un bras à six axes de rotation motorisés.

3. Installation selon l'une quelconque des revendications précédentes, dans laquelle l'unité de traitement (3A ou 3B) est une unité de découpe automatique, et de préférence une unité de découpe automatique d'un produit en plusieurs tranches.

4. Installation selon la revendication 3, dans laquelle les moyens électroniques de commande (5) sont aptes à commander le déplacement de la pince de préhension (10) dans l'unité de découpe automatique de manière à réaliser une découpe d'un produit (P) tenu par la pince (10) en plusieurs tranches ayant sensiblement le même poids.

5. Installation selon l'une quelconque des revendications précédentes, dans laquelle l'unité de traitement (3A ou 3B) comporte un plateau (31), qui est mobile et qui comporte une lumière de guidage (31a), et dans laquelle l'outil de préhension (10) comporte un doigt d'indexage (104) adapté pour être introduit dans la lumière de guidage (31a) du plateau (31) de manière à permettre une translation guidée de la pince de préhension (10) par le doigt d'indexage (104) coulissant dans la lumière de guidage ( 31) et à permettre un déplacement du plateau (31) au moyen de la pince de préhension (10) et par l'intermédiaire du doigt d'indexage (104) introduit dans la lumière de guidage (31a) dans au moins une direction transversale à la lumière de guidage (31).

6. Installation selon l'une quelconque des revendications précédentes, comportant un système de convoyage (4) permettant d'acheminer les produits (P) rigides les uns derrière les autres jusqu'à une zone de préhension (ZP) accessible par la pince de préhension (10).

7. Installation selon l'une quelconque des revendications précédentes comportant au moins deux bras manipulateurs robotisés (1A; 1B), qui sont équipés chacun d'une pince de préhension (10) adaptée pour saisir par une extrémité et tenir en porte-à-faux un produit rigide (P), et qui sont pilotés par lesdits moyens électroniques de commande (5) de telle sorte que pendant un premier cycle de fonctionnement un premier bras manipulateur (1A) effectue les opérations de préhension et d'acquisition numérique, au moyen de l'unité (2) de mesure 3D, de la géométrie en trois dimensions de tout ou partie du produit (P) saisi pendant que le deuxième bras manipulateur robotisé (1B) positionne et le cas échéant déplace un produit (P), qui a été saisi au cycle de fonctionnement précédent, par rapport à une unité de traitement (3B), et que pendant le cycle de fonctionnement suivant le deuxième bras manipulateur (1B) effectue les opérations de préhension et d'acquisition numérique, au moyen de l'unité (2) de mesure 3D, de la géométrie en trois dimensions de tout ou partie du produit (P) saisi pendant que le premier bras manipulateur robotisé (1A) positionne et le cas échéant déplace le produit (P) qui a été saisi au cycle de fonctionnement précédent par rapport à une unité de traitement (3A).

8. Installation selon l'une quelconque des revendications précédentes, dans laquelle une pince de préhension (10) comporte une face de préhension (1010a) et plusieurs doigts de préhension (102), dans laquelle chaque doigt de préhension (102) comporte une extrémité de préhension (102a), qui est orientée vers la face de préhension (1010a), et est mobile en translation linéaire par rapport à la face de préhension (1010a), le long d'un axe de translation (X), qui est perpendiculaire à la face de préhension (1010a), dans laquelle la pince de préhension (10) comporte des moyens d'actionnement des doigts (102), qui sont aptes à commander le déplacement, simultané ou non, des doigts (10) entre une position rentrée des doigts (102) et une configuration de préhension des doigts (102), dans laquelle chaque doigt (102) est déplacé indépendamment des autres doigts en direction de la face de préhension (1010a), jusque dans une position, qui peut être différente d'un doigt à l'autre, et dans laquelle le doigt (102) est apte à être bloqué en butée et en pression contre une surface interposée entre la face de préhension (1010a) et l'extrémité de préhension (102a) du doigt ( 102).

9. Installation selon la revendication 8, dans laquelle la face de préhension (1010a) comporte des rugosités de surface (1010b) améliorant l'accrochage d'un produit (P), et de préférence dans laquelle les rugosités de surface (1010b) sont formées par des rainures.

10. Installation selon l'une quelconque des revendications 8 ou 9, dans laquelle la pince de préhension (10) comporte une butée (1011a) de calage permettant de bloquer en translation, dans une direction parallèle à la face de préhension (1010a) de la pince de préhension (10), un produit (P) qui est en contact avec la face de préhension (1010a) de la pince de préhension (10), et de préférence dans laquelle ladite butée (1011a) de calage et la face de préhension (1010a) forment une équerre.

11. Installation selon l'une quelconque des revendications 10 à 14, dans laquelle chaque doigt (102) comporte une tige (102b) qui fait partie intégrante d'un actionneur linéaire ou qui est fixée rigidement à un actionneur linéaire, de préférence dans laquelle chaque actionneur linéaire est un vérin, et plus préférentiellement encore dans laquelle chaque actionneur linéaire est un vérin à commande pneumatique, hydraulique ou électrique et dans laquelle plusieurs doigts (102) et de préférence tous les doigts (102) sont aptes à être actionnés simultanément au moyen de la même source de fluide ou de la même source d'alimentation électrique.

12. Procédé de traitement d'un produit rigide (P) au moyen de l'installation de l'une quelconque des revendications précédentes, comportant les étapes successives suivantes :
- préhension au moyen de la pince de préhension (10) d'un produit rigide (P) à traiter, qui est saisi par une de ses extrémités et tenu en porte-à-faux par la pince de préhension ;
- déplacement de la pince de préhension (10) au moyen du bras manipulateur robotisé (1A ou 1B) de manière à positionner et le cas échéant à déplacer le produit (P) qui est tenu en porte-à-faux par la pince de préhension (10) par rapport à l'unité (2) de mesure 3D et acquisition numérique au moyen de l'unité (2) de mesure 3D de la géométrie en trois dimensions d'au moins une partie du produit (P) à traiter, et de préférence au moins de toute la partie du produit (P) qui est en porte-à faux par rapport à la pince de préhension (10),
- déplacement de la pince de préhension (10) au moyen du bras manipulateur robotisé (1A ou 1B), de manière à positionner le produit (P) tenu par la pince de préhension (10), par rapport à l'unité traitement (3A ou 3B),
- traitement automatique dudit produit (P), au moyen de l'unité traitement (3A ou 3B), en fonction au moins de la géométrie en trois dimensions de tout ou partie de ce produit, qui a été acquise numériquement au moyen de l'unité (2) de mesure 3D, le produit (P) étant de préférence tenu et le cas échéant éventuellement déplacé au moyen de la pince de préhension (10) au cours du traitement.

13. Procédé de traitement d'un produit rigide (P) selon la revendication 12, au moyen d'une l'installation de l'une quelconque des revendications 8 à 11, dans laquelle la préhension du produit (P) est effectuée en pinçant le produit (P) entre la face de préhension (1010a) de la pince de préhension (10) et tout ou partie des doigts de préhension (102) de la pince de préhension (10).

14. Utilisation de l'installation de l'une quelconque des revendications 1 à 11 pour traiter automatiquement un produit (P) rigide, plus particulièrement pour découper automatiquement un produit (P) rigide, de préférence pour découper automatiquement un produit (P) rigide en tranches, et plus particulièrement en tranches de poids sensiblement constant, et/ou de préférence dans laquelle le produit rigide est un produit alimentaire surgelé, et plus particulièrement un poisson surgelé ou une pièce de viande surgelée.

15. Programme informatique comprenant un moyen de code de programme informatique apte à être exécuté par des moyens électroniques de commande (5) d'une installation de l'une quelconque des revendications 1 à 11, et permettant, lorsqu'il est exécuté par ces moyens électroniques de commande (5), la mise en oeuvre des étapes du procédé de la revendication 12.

## Patentansprüche

1. Anlage zur Verarbeitung eines starren Produkts (P), wobei die Anlage aufweist: mindestens einen Roboter-Manipulatorarm (1A oder 1B), der mit einer Greifeinrichtung (10) ausgestattet ist, die dazu ausgelegt ist, ein starres Produkt (P) an einem Ende zu greifen und vorstehend zu halten, eine 3D-Messeinheit (2), die eine digitale Erfassung der Geometrie in drei Dimensionen mindestens eines Teils eines zu verarbeitenden Produkts erlaubt, eine Verarbeitungseinheit (3A oder 3B) und elektronische Steuerungsmittel (5), die dazu ausgelegt sind, die räumliche Bewegung der Greifeinrichtung (10) mittels des Roboter-Manipulatorarms (1A oder 1B) zu steuern, die Greifeinrichtung (10) zu steuern und die 3D-Messeinheit (2) und die Verarbeitungseinheit (3A, 3B) zu steuern, um die folgenden aufeinanderfolgenden Schritte für jede Verarbeitung eines starren Produkts auszuführen:
- Greifen mittels der Greifeinrichtung (10) eines zu verarbeitenden starren Produkts (P), wobei dieses an einem seiner Enden von der Greifeinrichtung gegriffen und vorstehend gehalten wird,
- Bewegen der Greifeinrichtung (10) mittels des Roboter-Manipulatorarms (1A oder 1B), um das Produkt (P), das von der Greifeinrichtung (10) in Bezug auf die 3D-Messeinheit (2) vorstehend gehalten wird, zu positionieren und gegebenenfalls zu bewegen, und digitale Erfassung mittels der 3D-Messeinheit (2) der dreidimensionalen Geometrie von mindestens einem Teil des zu verarbeitenden Produkts (P), und bevorzugt zumindest des gesamten Teils des Produkts (P), der in Bezug auf die Greifeinrichtung (10) vorsteht,
- Bewegen der Greifeinrichtung (10) mittels des Roboter-Manipulatorarms (1A oder 1B), um das von der Greifeinrichtung (10) gehaltene Produkt (P) in Bezug auf die Verarbeitungseinheit (3A oder 3B) zu positionieren,
- automatische Verarbeitung des Produkts (P) mittels der Verarbeitungseinheit (3A oder 3B), in Abhängigkeit von zumindest der dreidimensionalen Geometrie des gesamten oder eines Teils des Produkts, die mittels der 3D-Messeinheit (2) digital erfasst wurde, wobei das Produkt (P) bevorzugt während der Verarbeitung mittels der Greifeinrichtung (10) gehalten und ggf. bewegt wird.

2. Anlage nach Anspruch 1, wobei die 3D-Messeinheit (2) eine 3D-Scaneinheit und bevorzugt eine berührungslose 3D-Scaneinheit ist, und/oder wobei der Roboter-Manipulatorarm (1A oder 1B) ein Arm mit sechs motorisierten Rotationsachsen ist.

3. Anlage nach einem der vorhergehenden Ansprüche, wobei die Verarbeitungseinheit (3A oder 3B) eine Einheit zum automatischen Schneiden ist, und bevorzugt eine Einheit zum automatischen Schneiden eines Produkts in mehrere Scheiben ist.

4. Anlage nach Anspruch 3, wobei die elektronischen Steuerungsmittel (5) geeignet sind, die Bewegung der Greifeinrichtung (10) in der Einheit zum automatischen Schneiden so zu steuern, dass ein Schneiden eines von dem Greifer (10) gehaltenen Produkts (P) in mehrere Scheiben mit etwa dem gleichen Gewicht durchgeführt wird.

5. Anlage nach einem der vorhergehenden Ansprüche, wobei die Verarbeitungseinheit (3A oder 3B) eine Platte (31) aufweist, die beweglich ist und einen Führungsschlitz (31a) aufweist, und wobei das Greifwerkzeug (10) einen Indexstift (104) aufweist, welcher dazu geeignet ist, in den Führungsschlitz (31a) der Platte (31) eingeführt zu werden, so dass eine geführte Translation der Greifeinrichtung (10) durch den Indexstift (104), der in dem Führungsschlitz (31) gleitet, ermöglicht wird, und eine Bewegung der Platte (31) mittels der Greifeinrichtung (10) und mittels des in den Führungsschlitz (31a) eingeführten Indexstifts (104) in mindestens eine Richtung quer zu dem Führungsschlitz (31) ermöglicht wird.

6. Anlage nach einem der vorhergehenden Ansprüche, mit einem Fördersystem (4), welches die Beförderung der starren Produkte (P) nacheinander bis zu einer Greifzone (ZP), die für die Greifeinrichtung (10) zugänglich ist, ermöglicht.

7. Anlage nach einem der vorhergehenden Ansprüche mit mindestens zwei Roboter-Manipulatorarmen (1A; 1B), die jeweils mit einer Greifeinrichtung (10) ausgestattet sind, die geeignet ist, ein starres Produkt (P) an einem Ende zu greifen und vorstehend zu halten, und die von den elektronischen Steuerungsmitteln (5) so gesteuert werden, dass während eines ersten Betriebszyklus ein erster Manipulatorarm (1A) die Vorgänge des Greifens und der digitalen Erfassung, mittels der 3D-Messeinheit (2), der Geometrie in drei Dimensionen des gesamten oder eines Teils des gehaltenen Produkts (P) ausführt, während der zweite Roboter-Manipulatorarm (1B) ein Produkt (P), das in dem vorhergehenden Betriebszyklus gegriffen wurde, relativ zu einer Verarbeitungseinheit (3B) positioniert und gegebenenfalls bewegt, und während des folgenden Betriebszyklus der zweite Roboter-Manipulatorarm (1B) die Vorgänge des Greifens und der digitalen Erfassung, mittels der 3D-Messeinheit (2), der Geometrie in drei Dimensionen des gesamten oder eines Teils des gegriffenen Produkts (P) ausführt, während der erste Roboter-Manipulationsarm (1A) das Produkt (P), das in dem vorhergehenden Betriebszyklus gegriffen wurde, relativ zu einer Verarbeitungseinheit (3A) positioniert und gegebenenfalls bewegt.

8. Anlage nach einem der vorhergehenden Ansprüche, wobei eine Greifeinrichtung (10) eine Greiffläche (1010a) und mehrere Greiffinger (102) aufweist, wobei jeder Greiffinger (102) ein Greifende (102a) aufweist, welches der Greiffläche (1010a) zugewandt ist, und welches in linearer Bewegung in Bezug auf die Greiffläche (1010a) entlang einer Translationsachse (X), die senkrecht zu der Greiffläche (1010a) ist, bewegbar ist, wobei die Greifeinrichtung (10) Mittel zum Antreiben der Finger (102) aufweist, die geeignet sind, die gleichzeitige oder nicht gleichzeitige Bewegung der Finger (10) zwischen einer eingezogenen Position der Finger (102) und einer Greifkonfiguration der Finger (102) zu steuern, wobei jeder Finger (102) unabhängig von den anderen Fingern in Richtung der Greiffläche (1010a) bis zu einer Position bewegt wird, die von einem zu einem anderen Finger unterschiedlich sein kann, und wobei der Finger (102) geeignet ist, in Anschlag und unter Druck gegen eine zwischen der Greiffläche (1010a) und dem Greifende (102a) des Fingers (102) eingefügte Oberfläche blockiert zu werden.

9. Anlage nach Anspruch 8, wobei die Greiffläche (1010a) Oberflächenrauheiten (1010b) aufweist, die das Anhaften eines Produkts (P) verbessern, und wobei die Oberflächenrauheiten (1010b) bevorzugt durch Rillen gebildet sind.

10. Anlage nach einem der Ansprüche 8 oder 9, wobei die Greifeinrichtung (10) einen Blockieranschlag (1011a) aufweist, der es ermöglicht, eine Bewegung eines Produkts (P), das mit der Greiffläche (1010a) der Greifeinrichtung (10) in Kontakt ist, in einer Richtung parallel zur Greiffläche (1010a) der Greifeinrichtung (10) zu blockieren, und wobei bevorzugt der Blockieranschlag (1011a) und die Greiffläche (1010a) einen Winkel bilden.

11. Anlage nach einem der Ansprüche 10 bis 14, wobei jeder Finger (102) eine Stange (102b) aufweist, die ein integraler Bestandteil eines linearen Antriebs ist oder die starr an einem linearen Antrieb befestigt ist, wobei bevorzugt jeder lineare Antrieb ein Zylinder ist, und noch bevorzugter jeder lineare Antrieb ein pneumatisch, hydraulisch oder elektrisch betätigter Zylinder ist und wobei mehrere Finger (102) und bevorzugt alle Finger (102) geeignet sind, gleichzeitig durch die gleiche Fluidquelle oder die gleichen Stromquelle angetrieben zu werden.

12. Verfahren zur Verarbeitung eines starren Produkts (P) mittels der Anlage nach einem der vorhergehenden Ansprüche, mit den folgenden aufeinanderfolgenden Schritten:
- Greifen eines zu verarbeitenden starren Produkts (P) mit der Greifeinrichtung (10), wobei das Produkt an einem seiner Enden gegriffen und von der Greifeinrichtung vorstehend gehalten wird,
- Bewegen der Greifeinrichtung (10) mittels des Roboter-Manipulatorarms (1A oder 1B), um das Produkt (P), das von der Greifeinrichtung (10) in Bezug auf die 3D-Messeinheit (2) vorstehend gehalten wird, zu positionieren und gegebenenfalls zu bewegen, und digitale Erfassung der Geometrie in drei Dimensionen von zumindest einem Teil des zu behandelnden Produkts (P) mittels der 3D-Messeinheit (2), bevorzugt mindestens des gesamten Teils des Produkts (P) der in Bezug auf die Greifeinrichtung (10) vorsteht,
- Bewegen der Greifeinrichtung (10) mittels des Roboter-Manipulationsarms (1A oder 1B), um das von der Greifeinrichtung (10) gehaltene Produkt (P) in Bezug auf die Verarbeitungseinheit (3A oder 3B) zu positionieren,
- automatische Verarbeitung des Produkts (P) mittels der Verarbeitungseinheit (3A oder 3B), zumindest in Abhängigkeit der dreidimensionalen Geometrie des gesamten oder eines Teils des Produkts, die mittels der 3D-Messeinheit (2) digital erfasst wurde, wobei das Produkt (P) bevorzugt während der Verarbeitung mittels der Greifeinrichtung (10) gehalten und ggf. bewegt wird.

13. Verfahren zum Behandeln eines starren Produkts (P) nach Anspruch 12 mittels einer Anlage nach einem der Ansprüche 8 bis 11, wobei das Greifen des Produkts (P) durch Einklemmen des Produkts (P) zwischen der Greiffläche (1010a) der Greifeinrichtung (10) und allen oder einem Teil der Greiffinger (102) der Greifeinrichtung (10) bewirkt wird.

14. Verwendung der Anlage nach einem der Ansprüche 1 bis 11 zum automatischen Verarbeiten eines starren Produkts (P), insbesondere zum automatischen Schneiden eines starren Produkts (P), bevorzugt zum automatischen Schneiden eines starren Produkts (P) in Scheiben, und insbesondere in Scheiben von etwa gleichem Gewicht, und/oder wobei das starre Produkt bevorzugt ein gefrorenes Lebensmittelprodukt ist, insbesondere ein gefrorener Fisch oder ein gefrorenes Stück Fleisch.

15. Computerprogramm mit einem Computerprogrammcodemittel, das geeignet ist, von elektronischen Steuerungsmitteln (5) einer Anlage nach einem der Ansprüche 1 bis 11 ausgeführt zu werden, und bei Ausführung durch die elektronischen Steuerungsmittel (5) die Durchführung der Schritte des Verfahrens nach Anspruch 12 erlaubt.

## Claims

1. A facility for processing a rigid product (P), said facility comprising at least one robotic manipulator arm (1A or 1B), which is equipped with a gripping clamp (10) adapted to grip at one end and hold in cantilever a rigid product (P), a 3D measurement unit (2) allowing for digital acquisition of the three-dimensional geometry of at least part of a product to be processed, a processing unit (3A or 3B), and electronic control means (5), which are configured to control the movement in space of the gripping clamp (10) by means of the robotic manipulator arm (1A or 1B), to control the gripping clamp (10), and to control the 3D measurement unit (2) and the processing unit (3A, 3B), so as to carry out the following successive steps for each processing of a rigid product:
- gripping by means of the gripping clamp (10) of a rigid product (P) to be processed, which is gripped by one of its ends and held in cantilever by the gripping clamp,
- moving the gripping clamp (10) by means of the robotic manipulator arm (1A or 1B) so as to position and, if necessary, move the product (P) that is held in cantilever by the gripping clamp (10) relative to the 3D measurement unit (2) and digitally acquire by means of the 3D measurement unit (2) the three-dimensional geometry of at least part of the product (P) to be processed, and preferably at least the entire part of the product (P) that is cantilevered relative to the gripping clamp (10),
- moving the gripping clamp (10) by means of the robotic manipulator arm (1A or 1B), so as to position the product (P) held by the gripping clamp (10), relative to the processing unit (3A or 3B),
- automatic processing of said product (P), by means of the processing unit (3A or 3B), based on at least the three-dimensional geometry of all or part of this product, which has been digitally acquired by means of the 3D measurement unit (2), the product (P) being preferably held and, if necessary, optionally moved by means of the gripping clamp (10) during the processing.

2. The facility according to claim 1, wherein the 3D measurement unit (2) is a 3D scanning unit, and preferably a contactless 3D scanning unit, and/or wherein the robotic manipulator arm (1A or 1B) is an arm with six motorized axes of rotation.

3. The facility according to any one of the preceding claims, wherein the processing unit (3A or 3B) is an automatic cutting unit, and preferably an automatic cutting unit for cutting a product into multiple slices.

4. The facility according to claim 3, wherein the electronic control means (5) are able to control the movement of the gripping clamp (10) in the automatic cutting unit so as to cut a product (P) held by the clamp (10) into multiple slices having substantially the same weight.

5. The facility according to any one of the preceding claims, wherein the processing unit (3A or 3B) comprises a plate (31), which is movable and comprises a guide light (31a), and wherein the gripping tool (10) comprises an indexing finger (104) adapted to be inserted into the guide light (31a) of the plate (31) so as to allow guided translation of the gripping clamp (10) by the indexing finger (104) sliding in the guide light (31) and to allow movement of the plate (31) by means of the gripping clamp (10) and by means of the indexing finger (104) inserted into the guide light (31a) in at least one direction transverse to the guide light (31).

6. The facility according to any one of the preceding claims, comprising a conveying system (4) for conveying the rigid products (P) one behind the other to a gripping zone (ZP) accessible by the gripping clamp (10).

7. The facility according to any one of the preceding claims comprising at least two robotic manipulator arms (1A; 1B), which are each equipped with a gripping clamp (10) adapted to grip at one end and hold in cantilever a rigid product (P), and which are controlled by said electronic control means (5) so that during a first operating cycle a first manipulator arm (1A) performs the gripping and digital acquisition operations, by means of the 3D measurement unit (2), of the three-dimensional geometry of all or part of the gripped product (P) while the second robotic manipulator arm (1B) positions and, if necessary, moves a product (P), that was gripped during the preceding operating cycle, relative to the processing unit (3B), and during the next operating cycle the second manipulator arm (1B) performs the gripping and digital acquisition operations, by means of the 3D measurement unit (2), of the three-dimensional geometry of all or part of the gripped product (P) while the first robotic manipulator arm (1A) positions and, if necessary, moves the product (P) that was gripped during the preceding operating cycle relative to a processing unit (3A).

8. The facility according to any of the preceding claims, wherein a gripping clamp (10) comprises a gripping face (1010a) and several gripping fingers (102), wherein each gripping finger (102) comprises a gripping end (102a), which is oriented toward the gripping face (1010a), and is movable in linear translation relative to the gripping face (1010a), along a translation axis (X), which is perpendicular to the gripping face (1010a), wherein the gripping clamp (10) comprises finger actuation means (102), which are able to control the displacement, simultaneous or not, of the fingers (10) between a retracted position of the fingers (102) and a gripping configuration of the fingers (102), wherein each finger (102) is moved independently of the other fingers in the direction of the gripping face (1010a), up to a position, which may be different from one finger to another, and wherein the finger (102) is able to be blocked abutted and pressed against a surface interposed between the gripping face (1010a) and the gripping end (102a) of the finger (102).

9. The facility according to claim 8, wherein the gripping face (1010a) comprises surface roughness (1010b) enhancing the catching of a product (P), and preferably wherein the surface roughness (1010b) is formed by grooves.

10. The facility according to any one of claims 8 or 9, wherein the gripping clamp (10) comprises a wedge stop (1011a) allowing to block in translation, in a direction parallel to the gripping face (1010a) of the gripping clamp (10), a product (P) which is in contact with the gripping face (1010a) of the gripping clamp (10), and preferably wherein said wedge stop (1011a) and the gripping face (1010a) form a right angle.

11. The facility according to any one of claims 10 to 14, wherein each finger (102) comprises a rod (102b) which is an integral part of a linear actuator or which is rigidly attached to a linear actuator, preferably wherein each linear actuator is a cylinder, and more preferably still wherein each linear actuator is a pneumatically, hydraulically or electrically controlled cylinder and wherein several fingers (102) and preferably all the fingers (102) are able to be actuated simultaneously by means of the same fluid source or the same electrical supply source.

12. A method for processing a rigid product (P) by means of the facility of any of the preceding claims, comprising the following successive steps:
- gripping by means of the gripping clamp (10) a rigid product (P) to be processed, which is gripped by one of its ends and held in cantilever by the gripping clamp;
- moving the gripping clamp (10) by means of the robotic manipulator arm (1A or 1B) so as to position and, if necessary, move the product (P) that is held in cantilever by the gripping clamp (10) relative to the 3D measurement unit (2) and digitally acquire by means of the 3D measurement unit (2) the three-dimensional geometry of at least part of the product (P) to be processed, and preferably at least the entire part of the product (P) that is cantilevered relative to the gripping clamp (10),
- moving the gripping clamp (10) by means of the robotic manipulator arm (1A or 1B), so as to position the product (P) held by the gripping clamp (10), relative to the processing unit (3A or 3B),
- automatic processing of said product (P), by means of the processing unit (3A or 3B), based on at least the three-dimensional geometry of all or part of this product, which has been digitally acquired by means of the 3D measurement unit (2), the product (P) being preferably held and, if necessary, optionally moved by means of the gripping clamp (10) during the processing.

13. The method for processing a rigid product (P) according to claim 12, by means of a facility of any one of claims 8 to 11, wherein the gripping of the product (P) is carried out by pinching the product (P) between the gripping face (1010a) of the gripping clamp (10) and all or part of the gripping fingers (102) of the gripping clamp (10).

14. A utilization of the facility according to any one of claims 1 to 11 for automatically processing a rigid product (P), more particularly for automatically cutting a rigid product (P), preferably for automatically cutting a rigid product (P) into slices, and more particularly into slices of substantially constant weight, and/or preferably wherein the rigid product is a frozen food product, and more particularly a frozen fish or a frozen piece of meat.

15. A computer program comprising computer program code means able to be executed by electronic control means (5) of a facility according to any one of claims 1 to 11, and allowing, when executed by said electronic control means (5), the implementation of the steps of the method according to claim 12.
